# EUROPEAN PATENT APPLICATION

(11) **EP 4 321 232 A1**
(43) Date of publication of application: **14.02.2024**
(21) Application number: 22189462.9
(22) Date of filing: 09.08.2022
(51) Int. Cl.: B01D 33/82, F16K 3/08

(54) **FLUID CONTROL DEVICE FOR A FILTER DRUM, FLUID CONTROL ASSEMBLY, AND FILTRATION DEVICE**

(71) Applicant: ANDRITZ Separation GmbH, 85256 Vierkirchen (DE)
(72) Inventor: BRAMBERGER, Peter, 85256 Vierkirchen (DE); HAFNER, Marco, 85256 Vierkirchen (DE); FELLECHNER, Gerald, 85256 Vierkirchen (DE); POPP-WIRTH, Markus, 85256 Vierkirchen (DE); STAHL, Maximillian, 85256 Vierkirchen (DE); KNOBLOCH, Wolfgang, 85256 Vierkirchen (DE)
(74) Representative: Viering, Jentschura & Partner mbB Patent- und Rechtsanwälte

(57) **Abstract**

Fluid control device (10) for a filter drum, fluid control assembly, and filtration device, the fluid control device (10) comprising: an adjustable control disk (20) for a fluid control head, which comprises a control disk body (40) having at least one fluid control through hole (50) which provides at least partially a fluid flow control opening (60), wherein the control disk body (40) is provided with an insert receiving pocket (70) formed therein, an adjustment insert (80) inserted in the insert receiving pocket (70) and movable within the insert receiving pocket (70) into different circumferential positions in a manner so as to allow to adjustably overlap the fluid control through hole (50) to thereby adjust the fluid flow control opening (60); and an adjustment mechanism (90) operatively connected to the adjustment insert (80) and configured to move the adjustment insert (80) within the insert receiving pocket (70) to thereby move the adjustment insert (80) into its different circumferential positions.

## Description

### Field

The invention relates to a fluid control device for a filter drum, a fluid control assembly, and a filtration device.

### Background

In a known fluid control device, adjusting a fluid control through hole/ fluid control opening requires disassembling/opening the fluid control device and/or demounting the fluid control device (e.g. from a fluid control assembly and/or a filtration device, in which the fluid control device and, e.g., a sealing disk as well as, e.g., a filter drum are mounted to each other) and, hence, causes a long downtime of the fluid control assembly and/or the filtration device, high costs and effort.

### Summary

By the invention, a fluid control device for a filter drum, a fluid control assembly comprising a fluid control device, and a filtration device comprising a fluid control device or a fluid control assembly are provided, in which an adjustment insert is inserted in and movable within an insert receiving pocket into different circumferential positions by an adjustment mechanism to allow to adjustably overlap a fluid control through hole (and/or, e.g., to adjustably overlap the insert receiving pocket) to thereby adjust a fluid flow control opening, whereby the fluid flow control opening (e.g. a(n) (e.g., effective) flow cross-section of the fluid flow control opening) can be adjusted without disassembling/opening the fluid control device and/or without demounting the fluid control device (e.g. from a fluid control assembly and/or a filtration device, in which the fluid control device and, e.g., a sealing disk as well as, e.g., a filter drum are mounted to each other).

To this end, the invention provides a fluid control device for a filter drum, the fluid control device comprising: an adjustable control disk for a fluid control head for the filter drum, which comprises a control disk body defining a longitudinal direction (e.g., a longitudinal axis), a circumferential direction (e.g., perpendicular to and/or around the longitudinal direction or axis) and a radial direction (e.g., perpendicular to the longitudinal direction or axis), and having at least one fluid control through hole which penetrates the control disk body along the longitudinal direction, extends along the circumferential direction and provides at least partially a fluid flow control opening, wherein the control disk body is provided with an insert receiving pocket formed therein and extending in the circumferential direction in manner so as to be circumferentially aligned with the at least one fluid control through hole, an adjustment insert inserted in the insert receiving pocket and movable within the insert receiving pocket into different circumferential positions in a manner so as to allow to adjustably overlap the fluid control through hole (and/or, e.g., to adjustably overlap the insert receiving pocket) to thereby adjust the fluid flow control opening (e.g. a(n) (e.g., effective) flow cross-section of the fluid flow control opening); and an adjustment mechanism operatively connected to the adjustment insert and configured to move the adjustment insert within the insert receiving pocket along the circumferential direction to thereby move the adjustment insert into its different circumferential positions.

In a case in which the adjustment insert fully overlaps the insert receiving pocket in a circumferential direction towards the fluid control through hole and at least partially overlaps the fluid control through hole, there is provided (e.g., defined) an overlapping portion of the adjustment insert (in the circumferential direction towards the fluid control through hole). In this respect, the overlapping portion is that portion, by which the fluid control through hole is overlapped by the adjustment insert, and the fluid flow control opening is thus defined by the fluid control through hole minus the overlapping portion. Here, the fluid flow control opening (e.g., the (e.g., effective) flow cross-section of the fluid flow control opening) is provided (e.g., defined) by the fluid control through hole and the overlapping portion of the adjustment insert (in the circumferential direction towards the fluid control through hole). In other words, the fluid flow control opening (e.g., the (e.g., effective) flow cross-section of the fluid flow control opening) is provided (e.g., defined) by the fluid control through hole together with the adjustment insert. Here, the fluid flow control opening (e.g., the (e.g., effective) flow cross-section of the fluid flow control opening) is reduced as compared to a case in which the adjustment insert does not overlap the fluid control through hole at all.

In a case in which the adjustment insert does not fully overlap the insert receiving pocket in the circumferential direction towards the fluid control through hole (and does not overlap the fluid control through hole at all), there is provided (e.g., defined) a non-overlapped portion of the insert receiving pocket (in the circumferential direction towards the fluid control through hole) which is fluidly connected to the fluid control through hole. In this respect, the non-overlapped portion is that portion, by which the insert receiving pocket is not overlapped by the adjustment insert (in the circumferential direction towards the fluid control through hole) and the fluid flow control opening is thus defined by the fluid control through hole plus the non-overlapped portion. Here, the fluid flow control opening (e.g., the (e.g., effective) flow cross-section of the fluid flow control opening) is provided (e.g., defined) by the fluid control through hole and the non-overlapped portion of the insert receiving pocket (in the circumferential direction towards the fluid control through hole). In other words, the fluid flow control opening (e.g., the (e.g., effective) flow cross-section of the fluid flow control opening) is provided (e.g., defined) by the fluid control through hole together with the insert receiving pocket. Here, the fluid flow control opening (e.g., the (e.g., effective) flow cross-section of the fluid flow control opening) is increased as compared to the case in which the adjustment insert fully overlaps the insert receiving pocket in the circumferential direction towards the fluid control through hole and at least partially overlaps the fluid control through hole, or compared to a case in which the adjustment insert fully overlaps the insert receiving pocket in the circumferential direction towards the fluid control through hole and does not overlap the fluid control through hole at all.

The adjustment mechanism may, e.g., be connected to the adjustment insert in a mechanical manner. Optionally, the adjustment mechanism may, e.g., be connected to the adjustment insert in a mere (e.g., in a direct) mechanical manner (i.e., in a manner without any non-mechanical force-transmitting means (such as a hydraulic mechanism) between the adjustment mechanism and the adjustment insert).

The adjustment mechanism may, e.g., be arranged so as to extend at least partially radially outside the control disk body.

The control disk body may, e.g., be provided with a radial engagement recess having an access opening at a radial outside (e.g., at a radial end face) of the control disk body (and, e.g., having an engagement recess length along the circumferential direction), and via which the adjustment mechanism is operatively connected to the adjustment insert.

The adjustment insert may, e.g., be provided, on a side thereof facing the insert receiving pocket in the longitudinal direction, with a bubbling groove formed along the circumferential direction in an elongated manner, the adjustment insert may, e.g., be provided, on a side thereof facing away from the insert receiving pocket in the longitudinal direction, with a bubbling gap (e.g., a bubbling slot) formed along the radial direction in an elongated manner, and the bubbling groove may, e.g., be fluidly connected to the bubbling gap.

The adjustment insert may, e.g., be provided, on the side thereof facing the insert receiving pocket in the longitudinal direction, with a sealing ring extending around the bubbling groove. To this end, a sealing groove may, e.g., be formed around the bubbling groove so as to be distanced therefrom (i.e. so as to have a separation strip/separation saddle between the bubbling groove and the sealing groove) and a sealing ring may, e.g., be arranged in the sealing groove.

The insert receiving pocket may, e.g., be provided with a bubbling hole formed in the longitudinal direction (and, e.g., penetrating the control disk body in the longitudinal direction), and the bubbling hole may, e.g., be fluidly connected to the bubbling groove.

Thereby, a difference between a time, at which bubbling (e.g., caused by supplying a pressurized fluid to the bubbling hole and, thereby, to the bubbling groove) takes place, and a time, at which filtration (e.g. caused by supplying a pressurized fluid or a vacuum to the fluid control through hole) begins, is maintained constant (e.g., also for different circumferential positions of the adjustment insert, i.e., e.g., independent on the fluid flow control opening (e.g., independent on the (e.g., effective) flow cross-section of the fluid flow control opening).

The control disk body may, e.g., be provided with a plurality of fluid control through holes (e.g., penetrating the control disk body in the longitudinal direction) which are separated from each other in the circumferential direction by a plurality of separation walls. A number of the plurality of fluid control through holes may, e.g., correspond to a number of the plurality of separation walls.

The control disk body may, e.g., comprise an outer ring component formed in a radially outermost portion of the control disk body, an inner ring component formed radially inward from the outer ring component (wherein, e.g., the inner ring component and the outer ring component may be concentric to each other), a control portion located radially between the inner ring component and the outer ring component, the at least one fluid control through hole may, e.g., be arranged (e.g., so as to (e.g., entirely) extend between the outer ring component and the inner ring component) in the control portion, and the insert receiving pocket may, e.g., be arranged (e.g., so as to (e.g., entirely) extend between the outer ring component and the inner ring component) in the control portion.

The radial engagement recess may, e.g., be provided in the outer ring component (e.g., in a manner so as to open/expose the insert receiving pocket to an outside of the control disk body).

The insert receiving pocket may, e.g., be delimited in the radial direction by the inner ring component and the outer ring component, (the insert receiving pocket may, e.g., be delimited) in the circumferential direction by one of the plurality of separation walls, and (the insert receiving pocket may, e.g., be delimited) in the longitudinal direction by an insert receiving pocket platform (e.g., an insert receiving pocket bottom (or an insert receiving pocket bottom wall)) radially extending (e.g., entirely) between the inner ring component and the outer ring component.

The control disk body, on a side thereof oriented in a same direction as a/the side of the adjustment insert facing away from the insert receiving pocket in the longitudinal direction, may, e.g., be formed with a disk body sealing surface extending in a sealing surface plane so as to be contactable, in a sealing manner, by a sealing disk, which is configured to be co-rotatably provided on the filter drum, and the adjustment insert, on its side facing away from the insert receiving pocket, may, e.g., be formed with a corresponding insert sealing surface extending in the sealing surface plane so as to be flush with the disk body sealing surface and, thus, contactable, in a sealing manner, by the sealing disk.

According to an embodiment, a fluid control assembly comprises: a fluid control device as described in this application, wherein the adjustment mechanism comprises: a bracket fixed to the adjustment insert (wherein, e.g., the bracket is formed with the adjustment insert as one (e.g., single) piece (e.g., in an integral and/or monolithic manner)) and extending through the radial engagement recess so as to radially protrude, with a protruding portion (e.g., with a protruding end portion) thereof, from the control disk body toward an outside thereof, and having an engagement portion arranged on the protruding portion, and an actuating mechanism which is engaged with the engagement portion of the bracket, optionally in a mechanical manner, further optionally in a mere mechanical manner, and which is configured to move the adjustment insert within the insert receiving pocket along the circumferential direction.

The actuating mechanism may further comprise: an actuator and A) a shaft having a longitudinal shaft axis, and configured to be rotated around the shaft axis by the actuator, and a linkage operatively connected between the shaft and the engagement portion, in a manner so that, by a rotation of the shaft around the shaft axis, an actuating force is caused and transferred via the linkage to the engagement portion so as to move the adjustment insert within the insert receiving pocket along the circumferential direction; or B) a worm wheel segment (e.g., a segment of a worm wheel), by which the engagement portion of the bracket is formed, and which extends along the circumferential direction outside the control disk body, (and, e.g., which is made of a plastic material, such as Teflon,) and a screw shaft having a longitudinal screw shaft axis, configured to be rotated around the screw shaft axis by the actuator, and engaged with the worm wheel segment in a manner so that, by a rotation of the screw shaft, a driving force is caused and transferred to the worm wheel segment so as to move the worm wheel segment (together with the bracket) (e.g., along the circumferential direction) together with the adjustment insert within the insert receiving pocket along the circumferential direction; or C) a Bowden cable (e.g. a Bowden cable comprising a first Bowden cable portion and a second Bowden cable portion) fixedly mounted to the engagement portion of the bracket, and configured to be driven by the actuator in a manner so that by driving the Bowden cable, a driving force is caused and transferred via the Bowden cable to the engagement portion of the bracket so as to move the adjustment insert within the insert receiving pocket along the circumferential direction; or D) a flexible (e.g., angular flexible) shaft configured to be rotated (e.g., around itself) by the actuator, and extended by a screw spindle portion defining a longitudinal spindle axis, and a spindle holder fixedly mounted to the control disk body, and supporting the screw spindle portion in a manner so that the screw spindle portion is rotatable (e.g., around itself) and fixed to the spindle holder along the longitudinal spindle axis, wherein the screw spindle portion is engaged to the engagement portion of the bracket, optionally via a hinge connection, in a manner so that, via a rotation of the flexible shaft (e.g., around itself), a driving force is generated and transferred to the engagement portion of the bracket via the screw spindle portion so as to move the adjustment insert within the insert receiving pocket along the circumferential direction.

According to an embodiment, a filtration device comprises: a filter drum (e.g., provided with a piping which ends, at a drum end face, in a plurality of corresponding outlet openings); a sealing disk; and A) a fluid control device as described in this application or B) a fluid control assembly as described in this application; wherein the sealing disk is arranged between the adjustable control disk and the filter drum in a manner so as to establish a fluid sealing therebetween (e.g., wherein the sealing disk is provided with a plurality of openings arranged in a circumferential direction thereof so as to connect, in a fluidly sealed manner, the at least one fluid control through hole with the corresponding outlet openings or so as to connect, in a fluidly sealed manner, the plurality of fluid control through holes with the corresponding outlet openings), wherein, optionally, the filtration device is a pressure filtration device, a vacuum filtration device, a pressure/vacuum filtration device and/or a suction filtration device.

### Brief Description of the Drawings

In the following, the invention will be explained in detail with reference to the drawings. In the drawings:
Fig. 1 shows a front view of a fluid control device with an adjustment insert in a first circumferential position according to an embodiment of the invention (thereby forming a non-overlapped portion of the insert receiving pocket),
Fig. 2 shows a front view of the fluid control device with the adjustment insert in a second circumferential position according to an embodiment of the invention (thereby forming an overlapping portion of the adjustment insert),
Fig. 3 shows a front view of an adjustable control disk without the adjustment insert according to an embodiment of the invention,
Fig. 4 shows a perspective view of the adjustment insert according to an embodiment of the invention,
Fig. 5 shows another perspective view of the adjustment insert according to an embodiment of the invention,
Fig. 6 shows a front view of the fluid control device with the adjustment insert in a third circumferential position according to an embodiment of the invention (thereby forming another non-overlapped portion of the insert receiving pocket),
Fig. 7 shows a partial cross-sectional view of the fluid control device of Fig. 6 along line B-B as indicated in Fig. 6,
Fig. 8 shows a partial cross-sectional view of the fluid control device of Fig. 6 along line C-C as indicated in Fig. 6,
Fig. 9 shows a perspective view of a filtration device according to an embodiment of the invention,
Fig. 10 shows a perspective view of a fluid control assembly according to an embodiment of the invention,
Fig. 11 shows a perspective view of a fluid control assembly according to another embodiment of the invention,
Fig. 12 shows a perspective view of a fluid control assembly according to another embodiment of the invention, and
Fig. 13 shows a perspective view of a fluid control assembly according to another embodiment of the invention.

### Detailed Description

The following description of diverse embodiments of the invention is not intended to limit the invention to any one of these embodiments or corresponding details. Throughout the drawings, same reference signs are used for same components. Terms like "first", "second" etc. are intended to merely name a corresponding component, without defining a certain order or number of components so that, e.g., a component named as first component could also be a second component and vice versa.

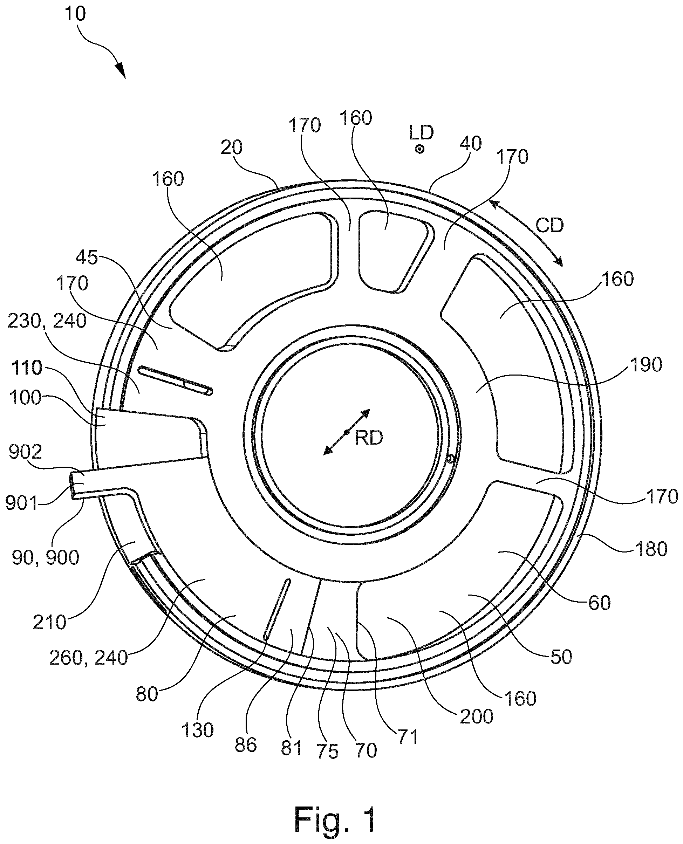

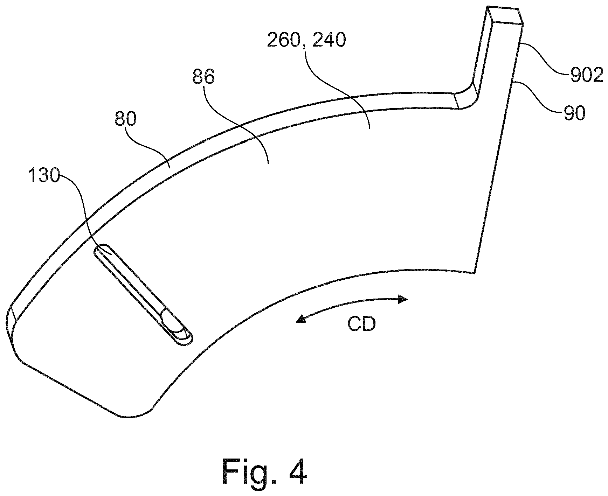

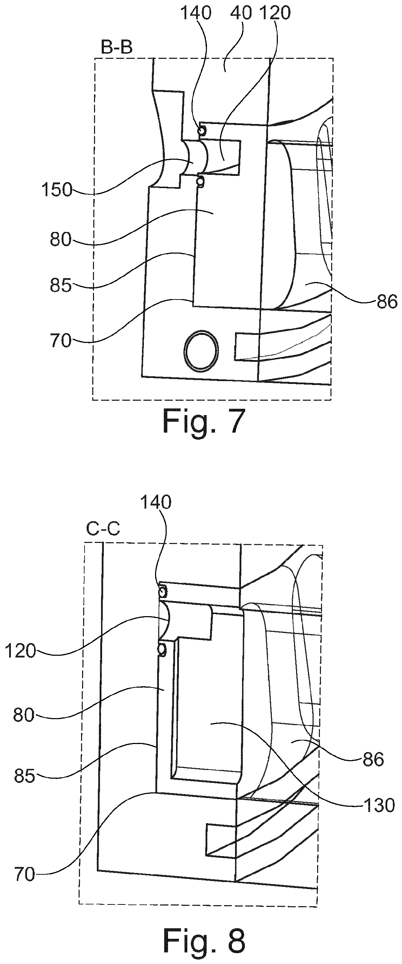

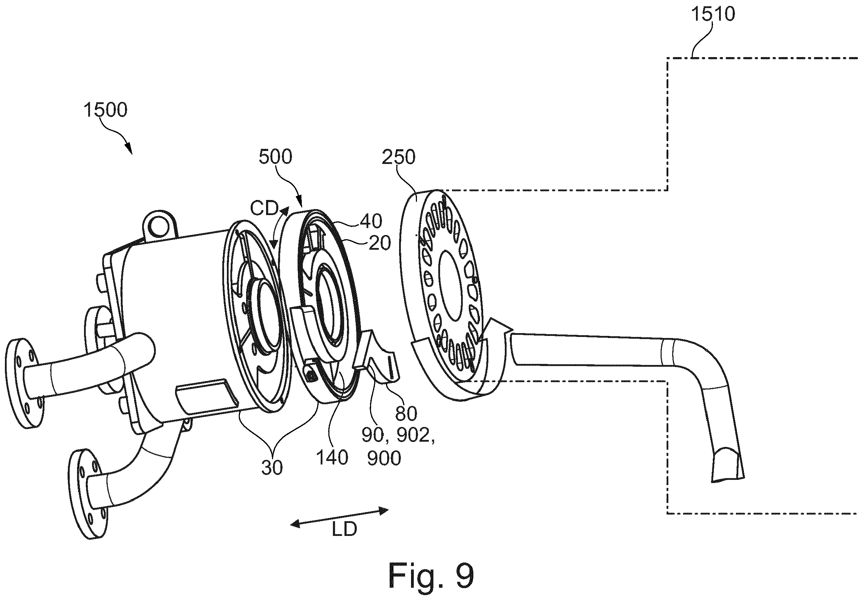

With reference to the drawings (see, e.g., Fig. 1, Fig. 2, Fig. 3, Fig. 4, Fig. 5, Fig. 6, Fig. 7 and Fig. 8), a fluid control device 10 for a filter drum 1510 (see Fig. 9) according to an embodiment of the invention comprises: an adjustable control disk 20 for a fluid control head 30 for the filter drum 1510, which comprises a control disk body 40 defining a longitudinal direction (e.g., a longitudinal axis) LD, a circumferential direction CD perpendicular to and around the longitudinal direction LD and a radial direction RD perpendicular to the longitudinal direction LD, and which has at least one fluid control through hole 50 which penetrates the control disk body 40 along the longitudinal direction LD, extends along the circumferential direction CD and provides at least a part of a fluid flow control opening 60, wherein the control disk body 40 is provided with an insert receiving pocket 70 formed therein and extending in the circumferential direction CD in manner so as to be circumferentially aligned with the at least one fluid control through hole 50 (e.g. so as to extend adjacent to the at least one fluid control through hole 50 with a same curvature radius and, thereby, being aligned with the at least one fluid control through hole 50). The control disk 20 first comprises an adjustment insert 80 inserted in the insert receiving pocket 70 and movable within the insert receiving pocket 70 into different circumferential positions in a manner so as to allow to adjustably overlap the fluid control through hole 50 (and/or, e.g., to adjustably overlap the insert receiving pocket 70) to thereby adjust the fluid flow control opening 60. The fluid control device 10 further comprises an adjustment mechanism 90 operatively connected to the adjustment insert 80 and configured to move the adjustment insert 80 within the insert receiving pocket 70 along the circumferential direction CD to thereby move the adjustment insert 80 into its different circumferential positions.

The adjustment mechanism 90 is connected to the adjustment insert 80 in a mere (e.g., exclusively in a) mechanical manner and the adjustment mechanism 90 is arranged so as to extend at least partially radially outside the control disk body 40.

The control disk body 40 is provided with a radial engagement recess 100 having an access opening 110 at a radial outside of the control disk body 40, and via which the adjustment mechanism 90 is operatively connected to the adjustment insert 80.

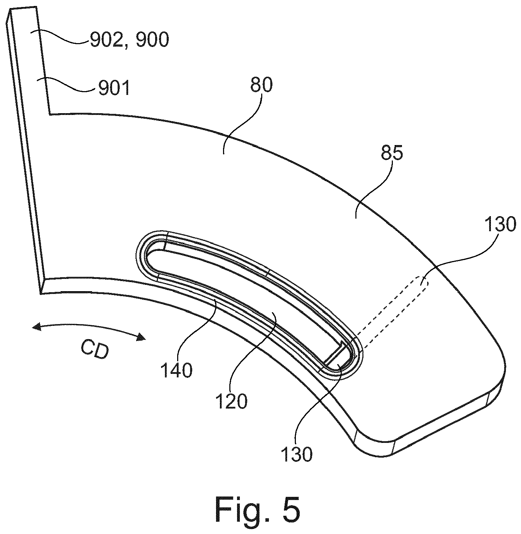

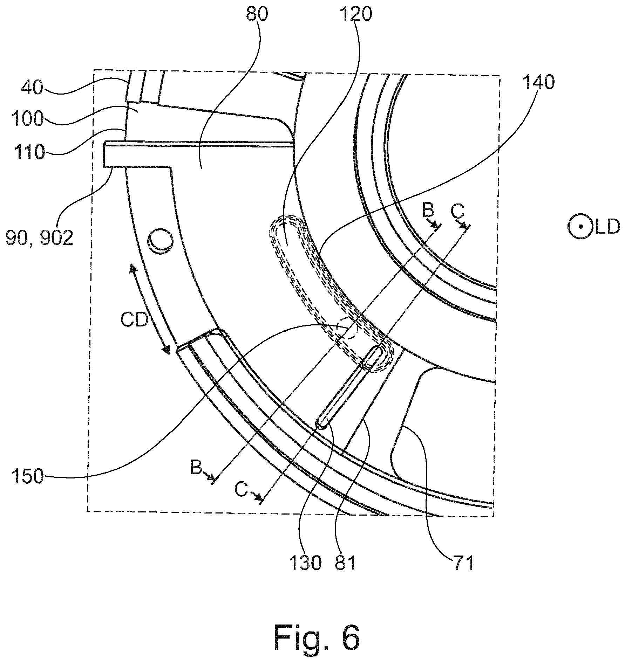

The adjustment insert 80 is provided (see, e.g., Fig. 5), on a side 85 thereof facing the insert receiving pocket 70 in the longitudinal direction LD, with a bubbling groove 120 formed along the circumferential direction CD in an elongated manner, the adjustment insert 80 is provided (see Fig. 6 and Fig. 5), on a side 86 thereof facing away from the insert receiving pocket 70 in the longitudinal direction LD, with a bubbling gap (e.g., a bubbling slot) 130 formed along the radial direction RD in an elongated manner, and the bubbling groove 120 is fluidly connected to the bubbling gap 130.

The adjustment insert 80 is provided (see, e.g., Fig. 5), on the side 85 thereof facing the insert receiving pocket 70 in the longitudinal direction LD, with a sealing ring (e.g., an O ring) 140 extending around the bubbling groove 120.

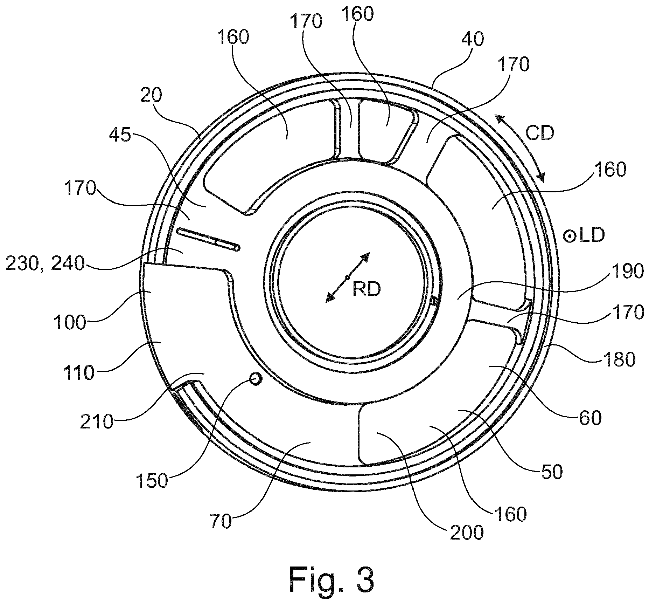

The insert receiving pocket 70 is provided (see, e.g, Figs. 3, 6 and 7) with a bubbling hole 150 formed in the longitudinal direction LD, that penetrates the control disk body 40 in the longitudinal direction LD, and the bubbling hole 150 is fluidly connected to the bubbling groove 120.

The control disk body 40 is provided (see, e.g., Fig. 3) with a plurality of fluid control through holes 160 which are separated from each other in the circumferential direction CD by a plurality of separation walls 170. The at least one fluid control through hole 50 is one of the plurality of fluid control through holes 160.

The control disk body 40 comprises (see, e.g., Fig. 1, Fig. 2 and Fig. 3): an outer ring component 180 formed in a radially outermost portion of the control disk body 40, an inner ring component 190 formed radially inward from the outer ring component 180, a control portion 200 located radially between the inner ring component 190 and the outer ring component 180. The at least one fluid control through hole 50 is arranged in the control portion 200, and the insert receiving pocket 70 is arranged in the control portion 200. The radial engagement recess 100 is provided in the outer ring component 180.

The insert receiving pocket 70 is delimited (see, e.g., Fig. 3) in the radial direction RD by the inner ring component 190 and the outer ring component 180, in the circumferential direction CD by one of the plurality of separation walls 170, and in the longitudinal direction LD by an insert receiving pocket platform 210 radially extending between the inner ring component 190 and the outer ring component 180.

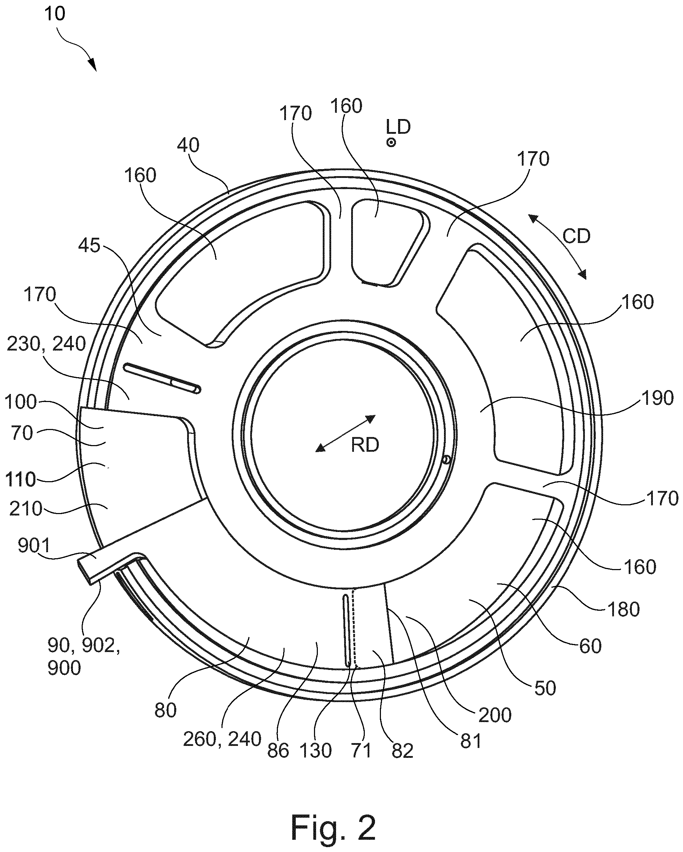

The control disk body 40, on a side 45 thereof oriented in a same direction as the side 86 of the adjustment insert 80 facing away from the insert receiving pocket 70 in the longitudinal direction LD, is formed with a disk body sealing surface 230 extending in a sealing surface plane 240 (see, e.g., Fig. 1, Fig. 2 and Fig. 3) so as to be contactable, in a sealing manner, by a sealing disk 250 which is configured to be co-rotatably provided on the filter drum 1510, and the adjustment insert 80, on its side 86 facing away from the insert receiving pocket 70, is formed with a corresponding insert sealing surface 260 extending in the sealing surface plane 240 (see, e.g., Fig. 1 and Fig. 2) so as to be flush with the disk body sealing surface 230 and, thus, contactable, in a sealing manner, by the sealing disk 250.

Fig. 1 shows, by way of example, a case in which the adjustment insert 80 is in a first circumferential position and does not fully overlap the insert receiving pocket 70 in the circumferential direction CD towards the fluid control through hole 50 (and does not overlap the fluid control through hole 50 at all). That is, an edge (e.g., an edge portion) 81 of the adjustment insert 80 in the circumferential direction CD towards the fluid control through hole 50 does not overlap an edge (e.g., an edge portion) 71 of the insert receiving pocket in the circumferential direction CD towards the fluid control through hole 50.

In this case, there is provided (e.g., defined) a non-overlapped portion 75 of the insert receiving pocket 70 (in the circumferential direction CD towards the fluid control through hole 50) which is fluidly connected to the fluid control through hole 50. In this respect, the non-overlapped portion 75 is that portion, by which the insert receiving pocket 70 is not overlapped by the adjustment insert 80 (in the circumferential direction CD towards the fluid control through hole 50) and the fluid flow control opening 60 is thus defined by the fluid control through hole 50 plus the non-overlapped portion 75. Here, the fluid flow control opening 60 (e.g., the (e.g., effective) flow cross-section of the fluid flow control opening 60) is provided (e.g., defined) by the fluid control through hole 50 and the non-overlapped portion 75 of the insert receiving pocket 70 (in the circumferential direction CD towards the fluid control through hole 50). In other words, the fluid flow control opening 60 (e.g., the (e.g., effective) flow cross-section of the fluid flow control opening 60) is provided (e.g., defined) by the fluid control through hole 50 together with a part (that is, the non-overlapped portion 75) of the insert receiving pocket 70. Here, the fluid flow control opening 60 (e.g., the (e.g., effective) flow cross-section of the fluid flow control opening 60) is increased as compared to a case in which the adjustment insert 80 fully overlaps the insert receiving pocket 70 in the circumferential direction CD towards the fluid control through hole 50 and at least partially overlaps the fluid control through hole 50 or a case in which the adjustment insert 80 fully overlaps the insert receiving pocket 70 in the circumferential direction CD towards the fluid control through hole 50 and does not overlap the fluid control through hole 50 at all.

Fig. 2 shows, by way of example, a case in which the adjustment insert 80 is in a second circumferential position and fully overlaps the insert receiving pocket 70 in the circumferential direction CD towards the fluid control through hole 50 and at least partially overlaps the fluid control through hole 50. In this case, there is provided (e.g., defined) an overlapping portion 82 of the adjustment insert 80 (in the circumferential direction CD towards the fluid control through hole 50), which overlapping portion 82 defines/means that part of the fluid control through hole 50, which is overlapped by the adjustment insert 80. Here, the fluid flow control opening 60 (e.g. the (e.g., effective) flow cross-section of the fluid flow control opening 60) is provided (e.g. defined) by the fluid control through hole 50 minus the overlapping portion 82. Here, the fluid flow control opening 60 (e.g. the (e.g., effective) flow cross-section of the fluid flow control opening 60) is reduced as compared to the case in which the adjustment insert 80 does not overlap the fluid control through hole 50 at all.

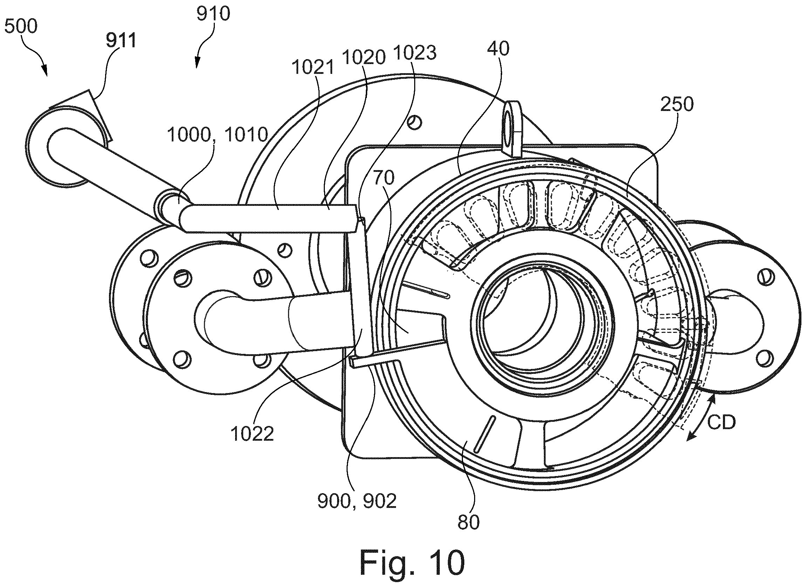

With reference to, e.g., Fig. 9, Fig. 10, Fig. 11, Fig. 12 and Fig. 13, according to an embodiment of the invention, a fluid control assembly 500 comprises: a fluid control device 10 as described in this application. The adjustment mechanism 90 comprises: a bracket 900 fixed to the adjustment insert 80 (in this case, being formed as one-piece with the adjustment insert 80) and extending through the radial engagement recess 100 so as to radially protrude, with a protruding portion 901 thereof, from the control disk body 40 toward an outside thereof, and having an engagement portion 902 arranged on the protruding portion 901, and an actuating mechanism 910 (see, e.g., Fig. 10 - Fig. 13) which is engaged with the engagement portion 902 of the bracket 900 in a mere mechanical manner, and which is configured to move the adjustment insert 80 within the insert receiving pocket 70 along the circumferential direction CD.

In the fluid control assembly 500, the actuating mechanism 910 further comprises an actuator 911.

As exemplarily shown in Fig. 10 for one embodiment of the fluid control assembly 500, the actuating mechanism 910 further comprises a shaft 1000 having a longitudinal shaft axis 1010, and configured to be rotated around the shaft axis 1010 by the actuator 911, and a linkage 1020 operatively connected between the shaft 1000 and the engagement portion 902, in a manner so that, by a rotation of the shaft 1000 around the shaft axis 1010, an actuating force is caused and transferred via the linkage 1020 to the engagement portion 902 of the bracket 900 so as to move the adjustment insert 80 within the insert receiving pocket 70 along the circumferential direction CD. Specifically, the linkage 1020 comprises a lever 1021 and a rod 1022, wherein the rod 1022 is fixed to the engagement portion 902 of the bracket 900 (e.g. in a hinged manner), the lever 1021 and the rod 1022 are connected to each other via a joint 1023 (e.g. in a hinged manner) and the shaft 1000 and the lever 1021 are fixedly connected to each other.

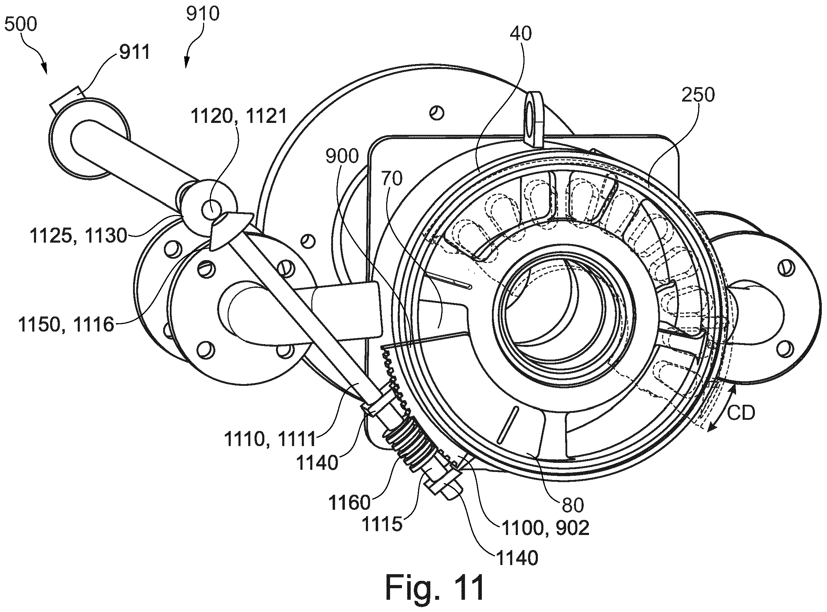

As exemplarily shown in Fig. 11 for another embodiment of the fluid control assembly 500, the actuating mechanism 910 further comprises a worm wheel segment 1100, by which the engagement portion 902 of the bracket 900 is formed, and which extends along the circumferential direction CD outside the control disk body 40, and a screw shaft 1110 having a longitudinal screw shaft axis 1111, configured to be rotated around the screw shaft axis 1111 by the actuator 911, and engaged with the worm wheel segment 1100 at a first end 1115 of the screw shaft 1110, in a manner so that, by a rotation of the screw shaft 1110, a driving force is caused and transferred to the worm wheel segment 1100 so as to move the worm wheel segment 1100 together with the bracket 900 and, thereby, move the adjustment insert 80 within the insert receiving pocket 70 along the circumferential direction CD. Specifically, the actuating mechanism 910 further comprises: a drive shaft 1120 having a longitudinal drive shaft axis 1121, having a bevel wheel 1130 at a first end 1125 of the drive shaft 1120, and configured to be rotated around the drive shaft axis 1121 via the actuator 911; a shaft guide 1140 fixedly arranged at an outside of the control disk body 40. Further, the screw shaft 1110 has a driven bevel wheel 1150 at a second end 1116 thereof which is engaged to the drive bevel wheel 1130 (the first end 1115 being opposite to the second end 1116). Further, the screw shaft 1110 has a screw 1160 at the first end 1115 thereof. The screw shaft 1110 is rotatably supported by the shaft guide 1140 so that the screw 1160 of the screw shaft 1110 and the worm wheel segment 1100 are engaged to each other. Further, the worm wheel segment 1100 may be made of Teflon.

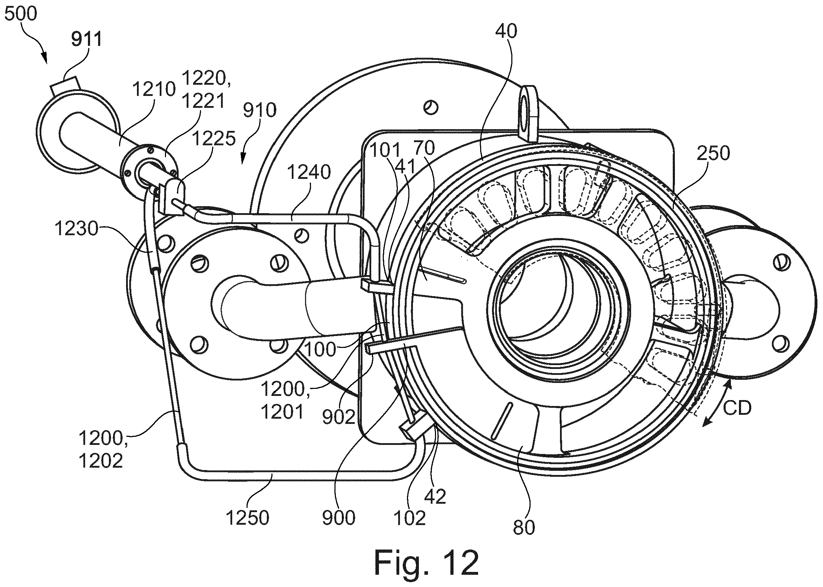

As exemplarily shown in Fig. 12 for another embodiment of the fluid control assembly 500, the actuating mechanism 910 further comprises a Bowden cable 1200 fixedly mounted to the engagement portion 902 of the bracket 900, and configured to be driven by the actuator 911, in a manner so that by driving the Bowden cable 1200, a driving force is caused and transferred via the Bowden cable 1200 to the engagement portion 902 of the bracket 900 so as to move the adjustment insert 80 within the insert receiving pocket 70 along the circumferential direction CD. Specifically, the actuating mechanism 910 further comprises a support pipe 1210, a bar 1220, a first cable guide 1230, a second cable guide 1240 and a third cable guide 1250. The bar 1220 is coaxial to the support pipe 1210, has a longitudinal bar axis 1221, has an engagement portion 1225, is movably arranged in the support pipe 1210, and is configured to be moved along the longitudinal bar axis 1221 via the actuator 911. The first cable guide 1230 is fixedly mounted at the support pipe 1210. The second cable guide 1240 is fixedly mounted at the control disk body 40 at a first circumferential site 41 thereof on a first circumferential side 101 of the radial engagement recess 100. The third cable guide 1250 is fixedly mounted at the control disk body 40 at a second circumferential site 42 thereof on a second circumferential side 102 of the radial engagement recess 100. The Bowden cable 1200 comprises a first Bowden cable portion 1201 and a second Bowden cable portion 1202. The first Bowden cable portion 1201 is fixedly attached to the engagement portion 1225 of the bar 1220 and to the engagement portion 902 of the bracket 900, and is movably guided by the second cable guide 1240. The second Bowden cable portion 1202 is fixedly attached to the engagement portion 1225 of the bar 1220 and to the engagement portion 902 of the bracket 900, and is movably guided by the first cable guide 1230 and the third cable guide 1250. Thereby, the first Bowden cable 1201 and the second Bowden cable 1202 are guided at least partially in parallel to the bar 1220 in a region in which the engagement portion 1225 of the bar 1220 is movable and are guided between the first circumferential site 41 and the second circumferential site 42 of the control disk body 40.

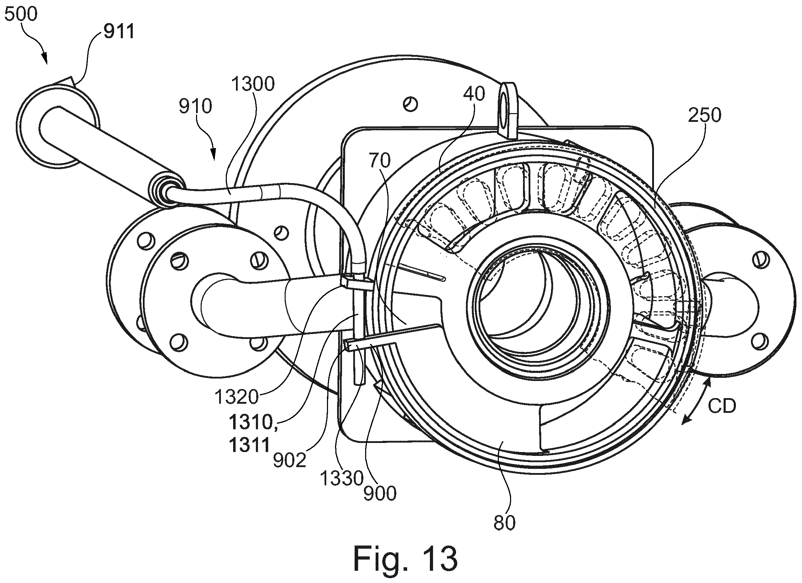

As exemplarily shown in Fig. 13 for another embodiment of the fluid control assembly 500, the actuating mechanism 910 further comprises a flexible shaft 1300 configured to be rotated by the actuator 911, and extended by a screw spindle portion 1310 defining a longitudinal spindle axis 1311, and a spindle holder 1320 fixedly mounted to the control disk body 40, and supporting the screw spindle portion 1310 in a manner so that the screw spindle portion 1310 is rotatable (e.g. around itself) and fixed to the spindle holder 1320 along the longitudinal spindle axis 1311, wherein the screw spindle portion 1310 is engaged to the engagement portion 902 of the bracket 900 via a hinge connection 1330 in a manner so that, via a rotation of the flexible shaft 1300, a driving force is generated and transferred to the engagement portion 902 of the bracket 900 via the screw spindle portion 1310 so as to move the adjustment insert 70 within the insert receiving pocket 80 along the circumferential direction CD.

As exemplarily shown in Fig. 9, according to an embodiment of the invention, a filtration device 1500 comprises: a filter drum 1510; a sealing disk 250; and a fluid control assembly 500 as described in this application. The sealing disk 250 is arranged between the adjustable control disk 20 and the filter drum 1510 in a manner so as to establish a fluid sealing therebetween. The filtration device 1500 may, e.g., be a pressure filtration device, a vacuum filtration device, a pressure/vacuum filtration device and/or a suction filtration device.

### List of Reference Signs

- 10: fluid control device
- 20: adjustable control disk
- 30: fluid control head
- 40: control disk body
- 41: first circumferential site
- 42: second circumferential site
- 45: side (of the control disk body)
- LD: longitudinal direction
- CD: circumferential direction
- RD: radial direction
- 50: fluid control through hole
- 60: fluid flow control opening
- 70: insert receiving pocket
- 71: edge (of the insert receiving pocket)
- 75: non-overlapped portion (of the insert receiving pocket)
- 80: adjustment insert
- 81: edge (of the adjustment insert)
- 82: overlapping portion (of the adjustment insert)
- 85: side (facing the insert receiving pocket)
- 86: side (facing away from the insert receiving pocket)
- 90: adjustment mechanism
- 100: radial engagement recess
- 101: first circumferential side (of the radial engagement recess)
- 102: second circumferential side (of the radial engagement recess)
- 110: access opening
- 120: bubbling groove
- 130: bubbling gap
- 140: sealing ring
- 150: bubbling hole
- 160: plurality of fluid control through holes
- 170: plurality of separation walls
- 180: outer ring component
- 190: inner ring component
- 200: control portion
- 210: insert receiving pocket platform
- 230: disk body sealing surface
- 240: sealing surface plane
- 250: sealing disk
- 260: insert sealing surface

- 500: fluid control assembly
- 900: bracket
- 901: protruding portion
- 902: engagement portion
- 910: actuating mechanism
- 911: actuator

- 1000: shaft
- 1010: longitudinal shaft axis
- 1020: linkage
- 1021: lever
- 1022: rod
- 1023: joint

- 1100: worm wheel segment
- 1110: screw shaft
- 1111: longitudinal screw shaft axis
- 1115: first end
- 1116: second end
- 1120: drive shaft
- 1121: longitudinal drive shaft axis
- 1125: first end
- 1130: drive bevel wheel
- 1140: shaft guide
- 1150: driven bevel wheel
- 1160: screw

- 1200: Bowden cable
- 1201: first Bowden cable portion
- 1202: second Bowden cable portion
- 1210: support pipe
- 1220: bar
- 1221: longitudinal bar axis
- 1225: engagement portion
- 1230: first cable guide
- 1240: second cable guide
- 1250: third cable guide

- 1300: flexible shaft
- 1310: screw spindle portion
- 1311: longitudinal spindle axis
- 1320: spindle holder
- 1330: hinge connection

- 1500: filtration device
- 1510: filter drum

## Claims

1. Fluid control device (10) for a filter drum (1510), comprising:
an adjustable control disk (20) for a fluid control head (30) for the filter drum (1510), which comprises
a control disk body (40)
defining a longitudinal direction (LD), a circumferential direction (CD) and a radial direction (RD), and
having at least one fluid control through hole (50) which penetrates the control disk body (40) along the longitudinal direction (LD), extends along the circumferential direction (CD) and provides at least partially a fluid flow control opening (60),
wherein the control disk body (40) is provided with an insert receiving pocket (70) formed therein and extending in the circumferential direction (CD) in manner so as to be circumferentially aligned with the at least one fluid control through hole (50),
an adjustment insert (80) inserted in the insert receiving pocket (70) and movable within the insert receiving pocket (70) into different circumferential positions in a manner so as to allow to adjustably overlap the fluid control through hole (50) to thereby adjust the fluid flow control opening (60); and
an adjustment mechanism (90) operatively connected to the adjustment insert (80) and configured to move the adjustment insert (80) within the insert receiving pocket (70) along the circumferential direction (CD) to thereby move the adjustment insert (80) into its different circumferential positions.

2. Fluid control device (10) according to claim 1, wherein the adjustment mechanism (90) is connected to the adjustment insert (80) in a mechanical manner, optionally in a mere mechanical manner.

3. Fluid control device (10) according to claim 1 or 2, wherein the adjustment mechanism (90) is arranged so as to extend at least partially radially outside the control disk body (40).

4. Fluid control device (10) according to any one of claims 1 to 3, wherein the control disk body (40) is provided with a radial engagement recess (100)
having an access opening (110) at a radial outside of the control disk body (40), and
via which the adjustment mechanism (90) is operatively connected to the adjustment insert (80).

5. Fluid control device (10) according to any one of claims 1 to 4, wherein
the adjustment insert (80) is provided, on a side (85) thereof facing the insert receiving pocket (70) in the longitudinal direction (LD), with a bubbling groove (120) formed along the circumferential direction (CD) in an elongated manner,
the adjustment insert (80) is provided, on a side thereof (86) facing away from the insert receiving pocket (70) in the longitudinal direction (LD), with a bubbling gap (130) formed along the radial direction (RD) in an elongated manner, and
the bubbling groove (120) is fluidly connected to the bubbling gap (130).

6. Fluid control device (10) according to claim 5, wherein the adjustment insert (80) is provided, on the side (85) thereof facing the insert receiving pocket (70) in the longitudinal direction (LD), with a sealing ring (140) extending around the bubbling groove (120).

7. Fluid control device (10) according to claim 5 or 6, wherein
the insert receiving pocket (70) is provided with a bubbling hole (150) formed in the longitudinal direction (LD), and
the bubbling hole (150) is fluidly connected to the bubbling groove (120).

8. Fluid control device (10) according to any one of claims 1 to 7, wherein the control disk body (40) is provided with a plurality of fluid control through holes (160) which are separated from each other in the circumferential direction (CD) by a plurality of separation walls (170).

9. Fluid control device (10) according to any one of claims 1 to 8, wherein
the control disk body (40) comprises
an outer ring component (180) formed in a radially outermost portion of the control disk body (40),
an inner ring component (190) formed radially inward from the outer ring component (180),
a control portion (200) located radially between the inner ring component (190) and the outer ring component (180),
the at least one fluid control through hole (50) is arranged in the control portion (200), and
the insert receiving pocket (70) is arranged in the control portion (200).

10. Fluid control device (10) according to claim 9 provided that in combination with claim 4, wherein the radial engagement recess (100) is provided in the outer ring component (180).

11. Fluid control device (10) according to claim 9 or 10 provided that in combination with claim 8, wherein the insert receiving pocket (70) is delimited
in the radial direction (RD) by the inner ring component (190) and the outer ring component (180),
in the circumferential direction (CD) by one of the plurality of separation walls (170), and
in the longitudinal direction (LD) by an insert receiving pocket platform (210) radially extending between the inner ring component (190) and the outer ring component (180).

12. Fluid control device (10) according to any one of claims 1 to 11, wherein
the control disk body (40), on a side (45) thereof oriented in a same direction as a/the side (86) of the adjustment insert facing away from the insert receiving pocket (70) in the longitudinal direction (LD), is formed with a disk body sealing surface (230) extending in a sealing surface plane (240) so as to be contactable, in a sealing manner, by a sealing disk (250), which is configured to be co-rotatably provided on the filter drum (1510), and
the adjustment insert (80), on its side (86) facing away from the insert receiving pocket (70), is formed with a corresponding insert sealing surface (260) extending in the sealing surface plane (240) so as to be flush with the disk body sealing surface (230) and, thus, contactable, in a sealing manner, by the sealing disk (250).

13. Fluid control assembly (500) comprising:
a fluid control device (10) according to any one of claims 1 to 12 provided that in combination with claim 4;
wherein the adjustment mechanism (90) comprises:
a bracket (900)
fixed to the adjustment insert (80) and extending through the radial engagement recess (100) so as to radially protrude, with a protruding portion (901) thereof, from the control disk body (40) toward an outside thereof, and
having an engagement portion (902) arranged on the protruding portion (901), and
an actuating mechanism (910)
which is engaged with the engagement portion (902) of the bracket (900), optionally in a mechanical manner, further optionally in a mere mechanical manner, and
which is configured to move the adjustment insert (80) within the insert receiving pocket (70) along the circumferential direction (CD).

14. Fluid control assembly (500) according to claim 13, wherein the actuating mechanism (90) further comprises:
an actuator (911) and
A) a shaft (1000)
having a longitudinal shaft axis (1010), and
configured to be rotated around the shaft axis (1010) by the actuator (911), and
a linkage (1020) operatively connected between the shaft (1000) and the engagement portion (902),
in a manner so that, by a rotation of the shaft (1000) around the shaft axis (1010), an actuating force is caused and transferred via the linkage (1020) to the engagement portion (902) so as to move the adjustment insert (80) within the insert receiving pocket (70) along the circumferential direction (CD); or
B) a worm wheel segment (1100),
by which the engagement portion (902) of the bracket (900) is formed, and
which extends along the circumferential direction (CD) outside the control disk body (40), and
a screw shaft (1110)
having a longitudinal screw shaft axis (1111),
configured to be rotated around the screw shaft (1111) axis by the actuator (911), and
engaged with the worm wheel segment (1100),
in a manner so that, by a rotation of the screw shaft (1110), a driving force is caused and transferred to the worm wheel segment (1100) so as to move the worm wheel segment (1100) together with the bracket (900) and, thereby, move the adjustment insert (80) within the insert receiving pocket (70) along the circumferential direction (CD); or
C) a Bowden cable (1200)
fixedly mounted to the engagement portion (902) of the bracket (900), and
configured to be driven by the actuator (911),
in a manner so that by driving the Bowden cable (1200), a driving force is caused and transferred via the Bowden cable (1200) to the engagement portion (902) of the bracket (900) so as to move the adjustment insert (80) within the insert receiving pocket (70) along the circumferential direction (CD); or
D) a flexible shaft (1300)
configured to be rotated by the actuator (911), and
extended by a screw spindle portion (1310) defining a longitudinal spindle axis (1311), and a spindle holder (1320)
fixedly mounted to the control disk body (40), and
supporting the screw spindle portion (1310) in a manner so that the screw spindle portion (1310) is rotatable and fixed to the spindle holder (1320) along the longitudinal spindle axis (1311), wherein
the screw spindle portion (1310) is engaged to the engagement portion (902) of the bracket (900), optionally via a hinge connection (1330),
in a manner so that, via a rotation of the flexible shaft (1300), a driving force is generated and transferred to the engagement portion (902) of the bracket (900) via the screw spindle portion (1310) so as to move the adjustment insert (80) within the insert receiving pocket (70) along the circumferential direction (CD).

15. Filtration device (1500), comprising
a filter drum (1510);
a sealing disk (1520); and
A) a fluid control device (10) according to any one of claims 1 to 12 or
B) a fluid control assembly (500) according to claim 13 or 14;
wherein the sealing disk (1520) is arranged between the adjustable control disk (20) and the filter drum (1510) in a manner so as to establish a fluid sealing therebetween,
wherein, optionally, the filtration device (1500) is a pressure filtration device, a vacuum filtration device, a pressure/vacuum filtration device and/or a suction filtration device.
